# EUROPEAN PATENT APPLICATION

(11) **EP 4 435 191 A1**
(43) Date of publication of application: **25.09.2024**
(21) Application number: 24165057.1
(22) Date of filing: 21.03.2024
(51) Int. Cl.: E04B 7/16, A01F 25/16, E04H 7/22

(54) **MODULAR RAIL SYSTEM**

(30) Priority: 21.03.2023 BE 202305213
(71) Applicant: Blommaert nv, 2110 Wijnegem (BE)
(72) Inventor: BLOMMAERT, Tom, 2110 Wijnegem (BE)
(74) Representative: Brantsandpatents bv

(57) **Abstract**

The present invention relates to a composite rail profile, comprising at least two rails, each rail comprising a running surface overhanging on an upright base plate reinforced by a bottom flange, wherein the running surface is suitable for supporting a number of wheeled sliding hatches, wherein each rail is made of extruded aluminum, wherein two composite rail profiles and the sliding hatches together form a sliding roof of a fixed structure, wherein the bottom flange comprises a recess, which recess is provided at an end of the bottom flange for connecting two adjacent rails in parallel. The invention also relates to an assembly and a method for assembling a composite rail profile for mobile support of a number of wheeled sliding hatches.

## Description

### TECHNICAL FIELD

The invention relates to a composite rail profile for supporting and moving sliding hatches to form the sliding roof of a fixed structure.

The invention also relates to an assembly as well as a method for assembling a composite rail profile for mobile support of a number of wheeled sliding hatches, wherein two composite rail profiles and the sliding hatches together form a sliding roof of a fixed structure.

### PRIOR ART

Sliding roofs offer a good covering solution for various industrial applications and have gained popularity in recent years. Sliding roofs provide a reliable solution in many sectors, such as agriculture, recycling, road construction and public services, and are suitable for storing and protecting various materials. Sliding roofs can efficiently cover large openings, making them ideally suited for covering large surfaces such as in the recycling sector, covering a salt storage facility, covering silos, and so on. In addition, sliding roofs are easy to operate and offer a high degree of flexibility and adaptability to different conditions and applications. Sliding roofs increase efficiency in loading and unloading storage areas due to their slideability. In addition, sliding roofs are used for environmental reasons. They protect the stored goods against weather influences and other external factors, allowing them to be stored for longer and maintaining their quality.

Supporting sliding roofs using rails is a well-known concept and is frequently used, but it entails various challenges. Due to the strength of steel and due to the desire and/or requirement to collect rainwater, these well-known supports are often folded troughs, also called rail troughs or profile troughs, in which angle bars are welded with a steel or stainless steel plate on top on which grooved wheels run. The production of these well-known rails or support legs, in particular the processing of the thick steel plate, hinders production and creates a bottleneck. The cutting and bending of known rail troughs is usually carried out at a steel wholesaler and creates dependency in production. Such known rail troughs must be provided with a coating against external resistance. Applying a coating will entail additional problems, such as issues with planning, transportation, additional costs, and so on. Various welding and post-treatments must also take place before the rail trough is operational, which is very time-consuming. Furthermore, these known rail troughs are often heavy and difficult to handle, which makes it difficult to use them.

A further important problem with existing sliding roofs is that they are limited in design. Often one type of rail trough can only be used for one type of sliding roof, leading to limitations in the design of sliding roofs. This can make it difficult to find a sliding roof that matches the functionality and aesthetics of a building or structure.

Finally, the safety concerning the sliding roofs is a major risk factor in the design of the rail troughs. In strong winds, large forces can be exerted on the sliding roof, which increases the risk of the roof blowing away and creating dangerous situations. This can especially be a problem with larger sliding roofs, where opening and closing requires more time and energy.

The present invention aims to solve at least some of the above problems or drawbacks. The aim of the invention is to provide a method which eliminates those disadvantages.

### SUMMARY OF THE INVENTION

In a first aspect, the present invention relates to a device according to claim 1. Preferred forms of the device are set out in claims 2 to 10.

The composite rail profile offers a tailor-made solution for different sliding hatches thanks to its modular design. The profile can consist of multiple rails and/or end profiles, which provides flexibility in creating the ideal combination for any type of sliding hatch. The composite rail profiles are characterized by high material quality. They are made of aluminum, which makes them resistant to wear, corrosion and other external influences. That is why they have a long lifespan and require little maintenance. Safety is an important aspect in the construction of sliding roofs, so the composite rail profile is designed with safety in mind. Hatch hooks of a sliding hatch, for example, engage in structures provided below on the composite rail profile to prevent the sliding hatch device from being blown up.

Another advantage of the composite rail profile is the simple installation. The rail profiles can be linked together on location, which saves time and money during installation. In addition, no welding or post-treatments are required, which further simplifies installation and maintenance. By correctly positioning the rails and the end profiles, more specifically the bottom flange and an adjacent recess, for coupling the rails, optimal and safe guidance of the sliding hatch can be guaranteed. This ensures smooth and accurate operation of the system, even under heavy loads and changing weather conditions.

The composite rail profile is designed to distribute the load evenly across the rails and end profiles, allowing the sliding hatch to be safely supported. This is especially important for large sliding hatches, where the load can be high and incorrect force distribution can lead to damage or even dangerous situations. The composite rail profile also offers a high degree of rigidity. Through the correct positioning of the rails and/or end profiles and the use of strong material, the profile can carry a lot of weight without deforming or bending. This is especially important for large sliding hatches, where forces can be high and incorrect rigidity can lead to damage. The combination of these advantages makes the composite rail profile a reliable and safe solution for guiding and supporting any type of sliding hatch.

Due to their modular nature, the rails can easily be linked together, making it easy to adapt the composite profile to the specific needs of a project.

In a second aspect, the present invention relates to a method according to claim 11. Preferred embodiments of the method are described in dependent claims 12 and 13.

This method is particularly advantageous because it offers an efficient way to assemble rails and/or end profiles into a composite rail profile. By first providing elongated rail profiles and then connecting them in parallel, the rail system can be assembled quickly and easily on location. In addition, anchoring ensures that the composite rail profile is stable and safe during use. This method can also help save time and costs because it is a streamlined process that does not require unnecessary steps or materials. For example, due to the low specific weight of aluminum and the modular nature of the rail profiles, all pre-assembly can be done without the help of a crane.

In a third aspect, the present invention concerns an assembly according to claim 14. Preferred embodiments of the assembly are described in dependent claim 15.

This assembly is particularly advantageous because a modular composite rail profile can be easily manufactured based on the needs of the fixed structure and/or the sliding roof.

### DESCRIPTION OF THE FIGURES

**Figure 1** shows a schematic cross-section of a composite rail profile of a preferred embodiment in an unassembled condition.
**Figure 2** shows a schematic cross-section of a composite rail profile according to a preferred embodiment in an assembled condition.
**Figure 3** shows a schematic perspective view of a composite rail profile according to a preferred embodiment in an assembled condition.
**Figure 4** shows a schematic cross-section of a composite rail profile of another preferred embodiment in an unassembled condition.
**Figure 5** shows a schematic cross-section of a composite rail profile of another preferred embodiment in an assembled condition.
**Figure 6** shows a schematic perspective view of a composite rail profile of another preferred embodiment in an assembled condition.
**Figure 7** shows a schematic cross-section of an anchored composite rail profile of a preferred embodiment in an unassembled condition.
**Figure 8** shows a schematic cross-section of an anchored composite rail profile of a preferred embodiment in an assembled condition.
**Figure 9** shows a schematic detail representation of the attachment means of a preferred embodiment of the present invention.
**Figure 10** shows a schematic cross-section of a composite rail profile on which a sliding hatch is provided, together forming a sliding roof according to a preferred embodiment.
**Figure 11** shows a schematic cross-section of an anchored composite rail profile of yet another preferred embodiment in an assembled condition.

### DETAILED DESCRIPTION

Unless otherwise defined, all terms used in the description of the invention, including technical and scientific terms, have the meanings as commonly understood by a person skilled in the art to which the invention pertains. For a better understanding of the description of the invention, the following terms are explained explicitly.

In this document, "a" and "the" refer to both the singular and the plural, unless the context presupposes otherwise. For example, "a segment" means one or more segments.

When the term "around" or "about" is used in this document with a measurable quantity, a parameter, a duration or moment, and the like, then variations are meant of approx. 20% or less, preferably approx. 10% or less, more preferably approx. 5% or less, even more preferably approx. 1% or less, and even more preferably approx. 0.1% or less than and of the quoted value, insofar as such variations are applicable in the described invention. However, this must be understood to mean that the value of the magnitude where the term "approximately" or "around" is used, is itself specifically disclosed.

The terms "comprise," "comprising," "consist of," "consisting of," "provided with," "include," "including," "contain," "containing," are synonyms and are inclusive or open terms that indicate the presence of what follows, and which do not exclude or prevent the presence of other components, characteristics, elements, members, steps, as known from or disclosed in the prior art.

Quoting numeric intervals by the endpoints includes all integers, fractions, and/or real numbers between the endpoints, including those endpoints.

The term "rail," as used herein, refers to a specific type of profile used as a guide for rolling sliding hatches. Rails are designed to a specific shape and size to be used as part of a composite rail profile, where the wheels of the sliding hatches run along/on the rails to guide and support the sliding hatch.

The term "profile," as used herein, is a broad term referring to any type of structural element having a specific shape and size. The term "end profile" refers to a profile that is provided on an end of a composite rail profile.

The term "sliding hatch," as used herein, refers to a horizontally movable panel used to close an opening. A sliding hatch is a component of a sliding roof.

The term "sliding roof," as used herein, refers to a roof structure consisting of one or more sliding hatches that can be shifted horizontally or diagonally to open and close the roof, wherein the sliding hatches are supported by a composite rail profile. A sliding roof is typically anchored to a fixed structure and is often used in industry and construction to provide access to areas or to protect/shield equipment and products.

The term "fixed structure," as used herein, refers to a structure that is attached to the ground, a building or other structure and cannot be easily moved. It can be used to fulfil a specific function, for example concrete blocks as a shed. Fixed structures can be built from a variety of materials, including wood, steel, concrete or stone, depending on the purpose and requirements of the project.

In a first aspect, the invention concerns a composite rail profile, comprising at least two rails. Each rail comprises a running surface overhanging an upright base plate reinforced by a bottom flange, wherein the running surface is suitable for supporting a number of wheeled sliding hatches, wherein two composite rail profiles and the sliding hatches together form a sliding roof of a fixed structure. In particular, the bottom flange comprises a recess, which recess is provided at one end of the bottom flange for connecting two adjacent rails in parallel.

Preferably, each rail comprises a running surface overhanging an upright base plate reinforced by a bottom flange, wherein the running surface is suitable for supporting a number of wheeled sliding hatches.

The term "running surface," as used herein, refers to a part of a rail over which a sliding hatch can move, preferably the wheels of a sliding hatch roll over this surface.

According to a preferred embodiment, the running surface extends along one side of the upright base plate. Due to the position mentioned, the running surface provides a secure hold for the hatch hooks of the sliding roofs, so that they are firmly hooked and the risk of being blown up is reduced. This contributes to a safer and more stable operation of the sliding roofs and prevents possible damage or injury due to unexpected movement or detachment of the sliding hatches.

According to an alternative embodiment, the running surface extends along either side of the upright base plate. When the running surface extends along both sides of the upright base plate, this may provide additional support and stability for the sliding roof that runs on it. This can be especially useful if the sliding roof, for example, is large and heavy and needs extra support to be able to move smoothly without wobbling. It can also contribute to an even distribution of the load on the sliding roof and prevent uneven wear of the running surface.

According to a preferred embodiment, the running surface is positioned relative to the upright base plate at an angle of at least 70°, preferably at least 75°, preferably at least 80°, preferably at least 85°, preferably at least 86°, preferably at least 87°, preferably at least 88°, and in particular at least 89°.

According to a preferred embodiment, the running surface is positioned relative to the upright base plate at an angle of at most 110°, preferably at most 105°, preferably at most 100°, preferably at most 95°, preferably at most 94°, preferably at most 93°, preferably at most 92°, and in particular at most 91°.

According to a preferred embodiment, the running surface is positioned relative to the upright base plate at an angle of at least 70° and at most 110°, preferably at least 75° and at most 105°, preferably at least 80° and at most 100°, preferably at least 85° and at most 95°, preferably at least 86° and at most 94°, preferably at least 87° and at most 93°, preferably at least 88° and at most 92°, and in particular at least 89° and at most 91°. Placing the running surface relative to the base plate at the preferred angles mentioned has several advantages. Firstly, it ensures that the wheels of the sliding hatches can easily roll over the running surface without blocking. In addition, these preferred angles provide better support for the sliding hatches, making the entire sliding roof more stable and safer. By positioning the running surface at the mentioned angle, an effective barrier is created against the sliding hatches running on the running surface from getting blown up. Due to its position, the running surface provides a secure hold for the hatch hooks of the sliding roofs, so that they can be firmly hooked and the risk of being blown up is reduced. All this contributes to a safer and more stable operation of the sliding roofs and prevents possible damage or injury due to unexpected movement or detachment of the sliding hatches.

According to a preferred embodiment, the running surface has a flat top. Due to the flat top, a sliding hatch wheel has a larger contact surface with the running surface, which allows the wheel to stay better on the running surface and improves stability. The flat top also ensures a better grip between the wheel and the running surface, so that the wheel will not slip quickly and the friction force between the wheel and the running surface is increased. Consequently, the wheel will wear more evenly, as there are no sharp edges or bumps for the wheel to roll over. The flat top is easier to maintain than a running surface with many bumps because there are fewer places where dirt and dust can accumulate.

According to a further and/or alternative embodiment, the running surface is provided with a groove and/or a tooth and/or a rib. These facilities are suitable for guiding various types of wheels, such as a grooved wheel, a bearing disc wheel, a polyurethane wheel, a steel wheel, a hardened steel wheel, a ball bearing wheel or bearing hubs. Providing a slot, tooth or rib in the running surface gives greater flexibility in terms of what type of wheel can be used with the rail profile. It provides more options for guiding different types of wheels, making it easier to adapt the composite rail profile to different applications and environments.

Preferably, each rail comprises an upright web plate. In addition to providing support to the running surface, the web plate also serves as additional reinforcement of the entire composite rail profile. Furthermore, the web plate can also help to keep the sliding hatch in place and prevent it from moving sideways by creating a space for the hatch hooks of sliding hatches to hook into.

Preferably, each rail includes a bottom flange. First, the bottom flange will strengthen the base plate. Subsequently, the bottom flange is also suitable for receiving attachment means to attach the composite rail profile to a surface, and preferably to a fixed structure. In particular, the bottom flange comprises a recess, which recess is provided at one end of the bottom flange for connecting two adjacent rails in parallel. Providing a recess ensures that two adjacent profiles fit together perfectly, leading to a strong and stable connection. The strength of the final rail system is guaranteed in this way.

According to a preferred embodiment, the bottom flange projects on either side of the upright base plate. On the one hand, it makes installation easier because the recess can be provided on one side of the rail while on the other side part of the bottom flange protrudes and is suitable to be received in the recess of an adjacent rail and/or end profile. On the other hand, it increases the stability of the composite rail profile, as less movement will occur between the rails and the sliding hatch as a result of this ideal connection system. This extends the lifespan of the composite rail profile and makes it more reliable and safer. In addition, the protruding flange on either side of the base plate ensures better watertightness because all parts fit together well. This reduces the risk of leakage and protects the system against weather influences. Finally, extending the bottom flange on either side of the base plate offers greater design freedom, as there are more options to shape the profile in different ways and tailor it to the specific needs of a project. This makes it possible to create a unique appearance and adapt it to the needs of the intended project.

According to a preferred embodiment, the bottom flange has a width that is substantially perpendicular to the upright base plate, wherein the recess extends over at least 5%, preferably at least 10%, preferably at least 15, preferably at least 20%, preferably at least 25%, preferably at least 30%, preferably at least 35%, preferably at least 40% of the total width of the bottom flange.

According to a preferred embodiment, the recess extends over a maximum of 70%, preferably a maximum of 65%, preferably a maximum of 60%, preferably a maximum of 55%, preferably a maximum of 50%, preferably a maximum of 45% of the total width of the bottom flange.

According to a preferred embodiment, the bottom flange has a length wherein the recess extends over the entire length of the bottom flange. This design makes it possible to connect the rails together in a safe manner and ensures a reliable and stable connection between the rails. However, in an alternative embodiment, the recess can only extend over part of the length of the bottom flange. This creates so-called connection points for parallel coupling of the rails. The disadvantage of this embodiment is that it can make coupling the rails more difficult.

According to a preferred embodiment, the bottom flange terminates on both sides of the width in the end, and an upright rib is provided on at least one of said ends of the bottom flange. By providing the upright rib, the composite rail profile becomes waterproof. A gutter is created, as it were, through which rainwater can be collected and recuperated. This is both economically and ecologically advantageous. Collecting and reusing rainwater is cost-saving and good for the environment. In addition, the gutter formation protects the underlying structures against the adverse effects of rainwater. Because the water is completely collected in the composite profile, it cannot come into contact with the underlying structure and thus negatively affect the lifespan of this structure. This can be particularly important in situations where the underlying structure is susceptible to corrosion or other forms of water damage.

According to a further, preferred embodiment, an upright rib is provided on both ends of the bottom flange. It is important to note that the height of the upright rib, along the end where the recess is located, must be less than the distance between the bottom flange and the running surface. This is essential to ensure that the upright rib of one rail can be positioned seamlessly between the bottom flange and the running surface of an adjacent rail. This specific design of the upright ribs makes it possible to connect the rails together in a simple and efficient manner and thus form a sturdy composite rail profile.

According to a preferred embodiment, the upright rib is substantially parallel to the upright base plate. In this way, two adjacent rails can be connected seamlessly, because the upright rib fits perfectly with the upright base plate of the adjacent rail. This precise placement of the upright rib guarantees a firm and stable connection between the rails, which contributes to the safety and durability of the composite rail profile and therefore also of the final sliding roof.

According to a preferred embodiment, the composite rail profile further comprises an end profile. An end profile is a special type of profile used to finish and/or protect the edges of the rail system. The design of the end profile is made in such a way that it fits seamlessly with the rails of the composite rail profile. An end profile can be used to protect the edges of a profile from wear or damage. An end profile also ensures that the edges of the rail system are safer. For example, to prevent people from hurting themselves on the edges. An end profile also serves the purpose of strengthening the edges of an object and making the rail system resistant to loads. The end profile comprises at least a bottom flange provided with an upright rib at at least one end.

Furthermore, an end profile is fully customizable and can take various forms depending on the desired finish. More preferably, the bottom flange is provided with a recess, suitable for parallel connection of the end profile to an adjacent rail. Even more preferably, the end profile can also be provided with a running surface supported by a base plate.

It is desirable that the composite rail profile has one end profile and in particular two end profiles are provided. The addition of an end profile to the composite rail profile offers many benefits, such as protecting the ends of the rail from damage and improving the aesthetics of the composite rail profile.

According to a preferred embodiment, the composite rail profile comprises at least two rails, preferably at least 3 rails, preferably at least 4 rails, preferably at least 5 rails, preferably at least 6 rails, preferably at least 7 rails, preferably at least 8 rails, preferably at least 9 rails, preferably at least 10 or even more rails.

In a preferred embodiment, the composite rail profile has a length of at least 0.1 m, preferably at least 0.5 m, preferably at least 1 m, preferably at least 5 m, preferably at least 10 m, preferably at least 15 m, preferably at least 20 m, preferably at least 25 m, preferably at least 30 m, preferably at least 35 m, preferably at least 40 m, preferably at least 45 m, preferably at least 50 m, preferably at least 100 m, preferably at least 200 m. Although using a longer rail profile can provide benefits such as a simpler and more efficient installation process, improved stability and greater design freedom, it is also possible to use a combination of short rail profiles and connect them together. The use of short rail profiles can be useful when it is not practical or cost-effective to use a long rail. In addition, the modular design of a short composite rail profile can provide greater flexibility in designing the system and adapting to different sizes and applications. However, when using multiple short composite rail profiles, extra attention must be paid to the attachment of the composite rail profiles to each other and to the substrate. This is necessary to ensure the stability of the system and to ensure that no movement occurs between the different rails and components. In short, the use of a long composite rail profile and the use of a short composite rail profile both have their advantages and the choice depends on the specific circumstances and requirements of the project.

In a preferred embodiment, the composite rail profile has a width of at least 5 cm, preferably at least 10 cm, preferably at least 15 cm, preferably at least 20 cm, preferably at least 25 cm, preferably at least 30 cm, preferably at least 35 cm, preferably at least 40 cm, preferably at least 45 cm, preferably at least 50 cm, preferably at least 60 cm, preferably at least 70 cm, preferably at least 80 cm, preferably at least 90 cm, preferably at least 100 cm. Using a composite rail profile with a minimum width offers several advantages. For example, a wider profile can provide higher stability of the system, which can increase the safety of the system. In addition, the use of a wider profile can contribute to a better distribution of weight over the surface, reducing the risk of bending or deformation of the profile. Another advantage of a wider rail profile is that it offers more space for anchoring the composite rail profile. Finally, the use of a wider rail profile can also contribute to a more aesthetically pleasing design, with a more robust and modern appearance. However, the choice of a specific width depends on the requirements of the project and the specific application.

In a preferred embodiment, the composite rail profile has a height of at least 1 cm, preferably at least 2 cm, preferably at least 3 cm, preferably at least 4 cm, preferably at least 5 cm, preferably at least 6 cm, preferably at least 7 cm, preferably at least 8 cm, preferably at least 9 cm, preferably at least 10 cm, preferably at least 11 cm, preferably at least 12 cm, preferably at least 13 cm, preferably at least 14 cm, preferably at least 15 cm, preferably at least 20 cm, preferably at least 25 cm, preferably at least 30 cm, preferably at least 35 cm, preferably at least 40 cm.

The height of the composite rail profile affects several aspects of the system's performance and design. For example, a higher height offers more space for attaching hatch hooks, making the system more resistant to wind loads and other external forces. In addition, a higher height can help create a gutter to collect and recover water. On the other hand, a lower height of the rail profile can offer advantages in terms of aesthetics and ease of use.

In general, the optimal height, width and length of the composite rail profile depend on several factors, such as the specific application, load requirements, design preferences and other considerations. This makes the composite rail profile modular in nature and it can be easily adapted to the needs of different projects and situations.

According to a preferred embodiment, each rail and/or each end profile is made of extruded aluminum. Aluminum extrusion rails and/or profiles are long pieces of aluminum that are made by extrusion. This is a process in which aluminum is pressed through a mold with a specific shape, allowing long pieces of aluminum with the same shape to be made. Aluminum extrusion profiles can be made in different shapes and sizes, meaning they can be easily adapted to the specific needs of the invention. It is very advantageous to work with aluminum because it is a light metal. This means that the rails and/or profiles are relatively light compared to other materials, such as steel. This makes it easier to transport and process the rail and/or profiles. Aluminum is a strong material and can withstand pressure and loads well. Aluminum is a corrosion-resistant metal, which means that the composite rail profile does not rust quickly or get damaged by moisture or other weather conditions. The composite rail profile therefore has a long lifespan, it can last for many years without having to be replaced. Aluminum is also a highly recyclable material, which means that aluminum extrusion profiles can easily be recycled when they reach the end of their lifespan.

In another embodiment it is also possible to manufacture the rails from other materials. First, it is possible to make the rails from an aluminum alloy. It is also possible to make the rails from steel. Steel is strong and durable, and can often be recycled. However, it can be heavier than aluminum and more susceptible to rust and corrosion. A solution to this is to use stainless steel, this type of steel has similar properties to steel, but is more resistant to rust and corrosion. Some types of plastic, such as polycarbonate or acrylic, can be strong and durable enough to make rails from, while also being lightweight. However, they may be less resistant to high temperatures and wear than metallic materials. Finally, titanium is lightweight, strong and durable, and also has good corrosion-resistant properties. However, it can be more expensive than aluminum.

In a second aspect, the invention concerns a method for assembling a composite rail profile for mobile support of a number of wheeled sliding hatches, wherein two composite rail profiles and the sliding hatches together form a sliding roof of a fixed structure.

This method is particularly advantageous because it provides an efficient way to assemble a rail system. By first providing elongated rail profiles and then connecting end profiles, the rail system can be assembled quickly and easily on location. In addition, anchoring the rail system ensures that the rail system is stable and safe during use. This method can also help save time and costs because it is a streamlined process that does not require unnecessary steps or materials.

In a preferred embodiment, two or more elongated rails are provided in a first step of the method.

In a preferred embodiment, the said elongated rails are coupled in a second step of the method to form a composite rail profile.

According to a preferred embodiment, coupling takes place by connecting two adjacent elongated rails in parallel, wherein each elongated rail is provided with a recess for said parallel connecting of two adjacent rails. Connecting two adjacent elongated rails and/or a rail with an end profile in parallel to form a composite rail profile has several advantages. Firstly, it provides a strong and stable connection between the rails, which means that the composite rail profile will exhibit less movement and be more durable. Secondly, parallel connecting offers more design freedom, because it is possible to shape the composite rail profile in different ways and adapt it to the specific needs of a project. Third, the use of a recess in the elongated rails ensures accurate and efficient assembly, reducing installation time and lowering production costs. Finally, connecting the elongated rails in parallel offers an aesthetic advantage, because the connection between the rails is barely visible, which contributes to a sleek and seamless appearance of the composite rail profile.

According to a preferred embodiment, the elongated rails are coupled in an overlapping manner, wherein two adjacent elongated rails overlap each other by at least 10%, preferably at least 15%, preferably at least 20%, preferably at least 25%, preferably at least 30%, preferably at least 35%, preferably at least 40%. The overlapping connection increases the stability of the composite profile. The overlapping parts form a sturdy connection, reducing the chance of the rails coming loose or shifting. The overlapping parts also ensure better transfer of loads between the rails and/or end profiles. This ensures that the load is better distributed over the composite rail profile and peak loads are avoided. The risk of corrosion is also reduced, as the overlaps create a barrier against moisture and dirt, which better protects the composite rail profile against corrosion.

In a preferred embodiment, the composite rail profile is provided on the fixed structure in a third step of the method.

In a preferred embodiment, the composite rail profile is anchored to the fixed structure in a fourth and final step of the method. Anchoring the composite rail profile to the fixed structure is necessary to ensure that the rail profile is firmly and stably attached and does not shift or move during use. By anchoring the rail profile to the fixed structure, safe and reliable operation is guaranteed. In addition, anchoring can contribute to a longer lifespan of the rail profile and the underlying structure by reducing the risk of damage or wear.

According to a preferred embodiment, the composite rail profile is chemically and/or mechanically anchored to the fixed structure. Mechanical anchoring means are physical components used in this context to attach the composite rail profiles to a fixed structure. Examples of mechanical attachment means include bolts, nuts, nails, screws, hooks, anchors, rings and clips. Chemical anchoring means are adhesives, sealants and other materials used in this context to attach the composite rail profile to the substrate. They are alternatives to mechanical attachment means because they are easy to use and often make a secure connection. Chemical attachment means are also useful in situations where mechanical attachment means cannot be used, such as when attaching the composite rail profile to a liquid-like or flexible substrate is necessary. There are several types of chemical attachment means available, non-limiting examples are glue, epoxy, sealant and rubber glue.

In a third aspect, the invention concerns an assembly comprising at least two composite rail profiles suitable for mobile support of a number of wheeled sliding hatches, wherein two composite rail profiles and the sliding hatches together form a sliding roof of a fixed structure.

According to a preferred embodiment, the composite rail profile is a composite rail profile according to the first aspect of the invention. This assembly is advantageous because it provides an efficient and safe way to support and move sliding hatches. The use of composite rail profiles creates a sturdy and stable construction, which ensures smooth and safe movement of the sliding hatches. In addition, the use of composite rail profiles ensures that the load on the sliding hatches is evenly distributed over the rails, which extends the lifespan of both the sliding hatches and the rails. Using this assembly also allows for more efficient use of available space. The composite rail profile can even be anchored to a fixed structure in an overhanging position. This makes the assembly ideal, even for applications where space is limited.

In what follows, the invention is described by way of non-limiting figures illustrating the invention, and which are not intended to and should not be interpreted as limiting the scope of the invention.

### DESCRIPTION OF THE FIGURES

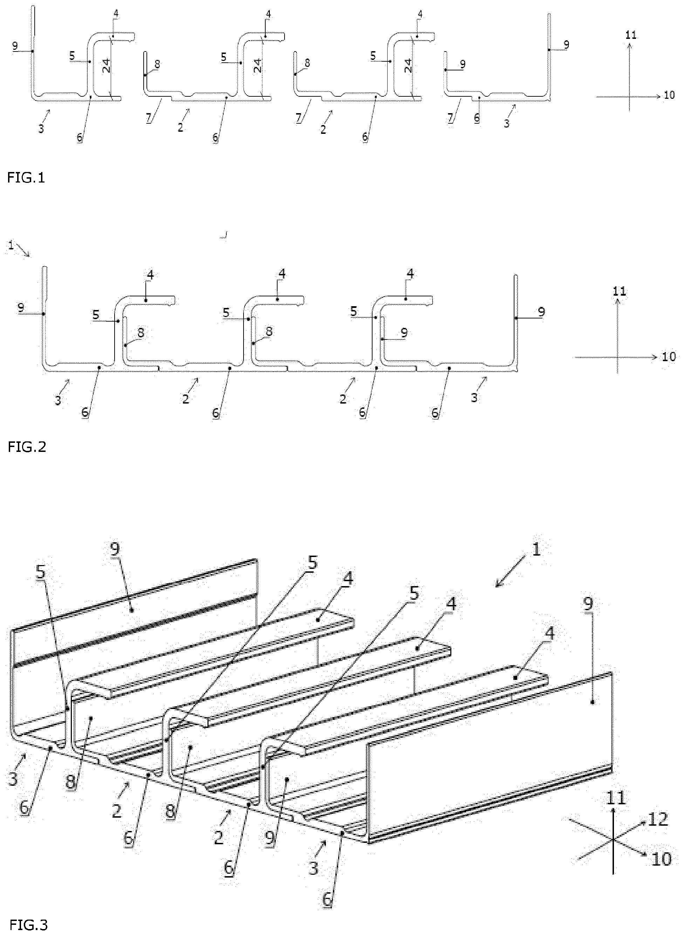

Figures 1, 2 and 3 each show a composite rail profile 1 of a preferred embodiment. In this preferred form the composite rail profile 1 comprises two rails 2 and two end profiles 3, wherein each end profile 3 has a different shape. Each rail 2 comprises a running surface 4 that is placed on an upright base plate 5, which upright base plate 5 is reinforced by a bottom flange 6. The bottom flange 6 comprises a recess 7 and an upright rib 8, which upright rib 8 is positioned at the same end as where the recess 7 is provided. The recess 7 is suitable for receiving part of the bottom flange 6 of an adjacent rail 2 and/or end profile 3 so that they fit together seamlessly. It should be noted that each rail 2 is provided with an upright rib 8 along the same end as where the recess 7 is located, therefore it is necessary that the height of the upright rib 8 is less than the distance 24 between the running surface 4 and the bottom flange 6. In this way it is ensured that the rails 2 and/or end profiles 3 fit together seamlessly.

The composite rail profile 1 comprises two different end profiles 3. These end profiles 3 are intended to finish the edges of the composite rail profile 1. It is important to note that each end profile 3 has a unique shape. A first type of end profile is designed to fit into the recess 7 of an adjacent rail 3, and will also comprise a running surface 4 supported by an upright base plate 5. The second type of end profile is equipped with a recess 7 for connecting to the bottom flange 6 of an adjacent rail 2. The end profiles 3 are equipped with one or two upright ribs 9, each positioned on the ends of the end profile 3, to finish the edges. The outer ribs 9 will typically be higher than the rest, which serves for finishing and gutter formation.

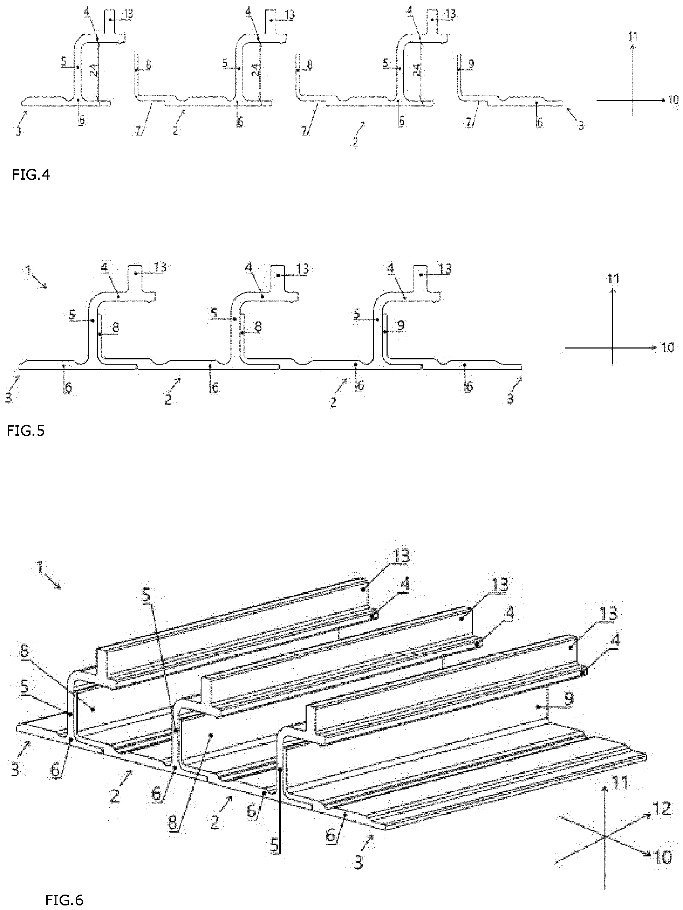

Figures 4, 5 and 6 each show a composite rail profile 1 of another preferred embodiment. In this preferred form the composite rail profile comprises two rails and two end profiles, where each end profile has a different shape. The rails 2 from figures 4, 5 and 6 are similar to the rails 2 in figures 1, 2 and 3. The difference is mainly in the end profiles 3. The composite rail profile 1 comprises two different end profiles 3. These end profiles 3 are intended to finish the edges of the composite rail profile 1. It is important to note that each end profile 3 has a unique shape. A first type of end profile is designed to fit into the recess 7 of an adjacent rail 3 and also comprises a running surface 4, supported by an upright base plate 4 for supporting a wheel 21 of a sliding hatch 19. The second type of end profile 3 is equipped with a recess 7 for connecting to the bottom flange 6 of an adjacent rail 2, and comprises one upright rib 9. The upright rib 9 has a height that is smaller than the distance 24 between the running surface 4 and the bottom flange 6 of an adjacent rail 2, in this way an adjacent rail 2 and the end profile 3 can be seamlessly connected to each other.

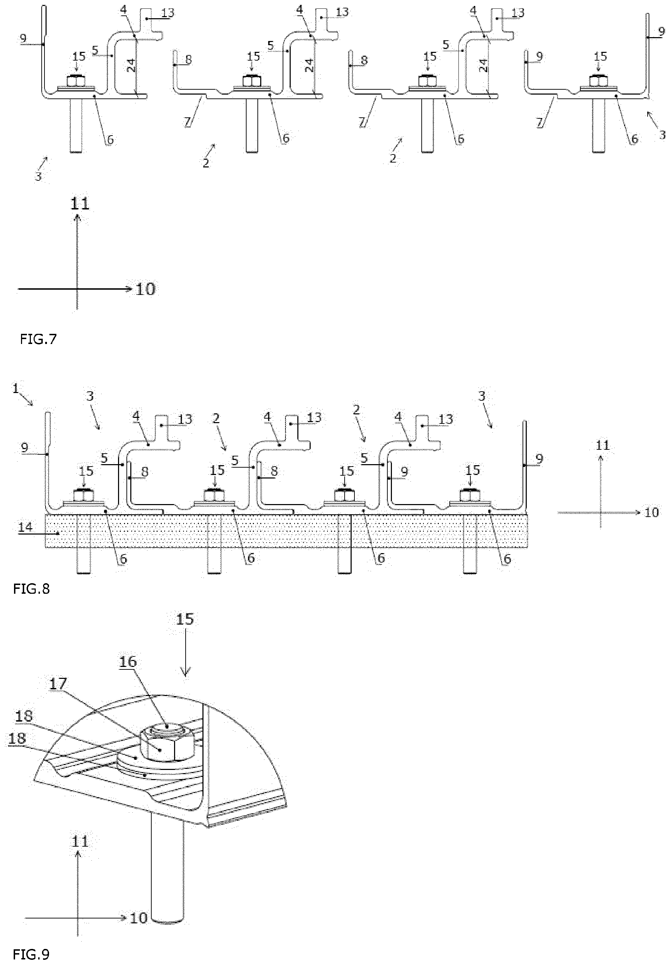

Figures 7 and 8 show an anchored composite rail profile 1 of a preferred embodiment. In this preferred form the composite rail profile 1 comprises two rails 2 and two end profiles 3, wherein each end profile 3 has a different shape. The composite rail profile 1 is similar in form to a preferred form of the composite rail profile 1 from Figures 1, 2 and 3, with the difference that in this embodiment the composite rail profile 1 is anchored to a substrate 14, preferably to a fixed structure. It will be apparent that each rail 2 and each end profile 3 of the composite rail profile 1 is anchored. In this preferred embodiment, the rails 2 and end profiles 3 are attached to a substrate by means of mechanical attachment means 15.

Figure 9 shows a schematic detail representation of the attachment means 15 of a preferred embodiment of the present invention. In the proposed preferred form, the attachment means comprise mechanical attachment means 15 that are fitted through the bottom flange 6 into the intended substrate 14 on which the composite rail profile 1 is to be anchored. In this embodiment the mechanical attachment means 15 relate to an anchor 16, a nut 17 and washers 18. The anchor 16 is positioned on the bottom flange 6 of a rail 2 and/or an end profile 3, after which one or more washers 18 are provided on the anchor 16, after which the nut 17 is tightened on the anchor 16.

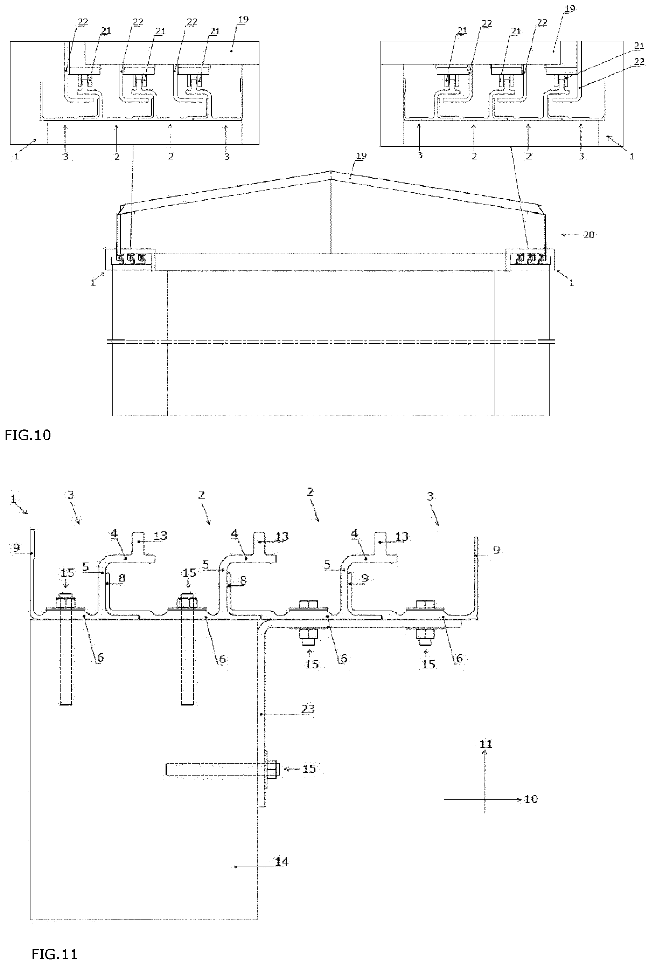

Figure 10 shows a schematic cross-section of a composite rail profile 1 on which a sliding hatch 19 is provided, together forming a sliding roof 20 according to a preferred embodiment. This figure further shows an enlarged view of a cross-section of two composite rail profiles 1 on either side of the sliding hatch 19. The positioning of the sliding hatches 19 on the composite rail profiles 1 is shown in this figure. It is clearly visible that the wheels 21 of the sliding hatches are positioned on the rib 13 of the running surface 4. This figure further shows that the hatch hooks 22 hook between the running surface 4 and the bottom flange 6, so that the sliding hatches 19 will not blow up.

Figure 11 shows a differently anchored composite rail profile 1 of a preferred embodiment in an assembled condition. It is clear that there are various anchoring and installation options available. In this embodiment, the composite rail profile 1 comprises two rails 2 and two end profiles 3, anchored on a substrate 14. The special thing here is that part of the composite rail profile 1 will overhang the substrate 14. The composite rail profile 1 is here reinforced by applying an extra reinforcing slat 23 to the underside of the composite rail profile 1, which is overhanging. In this embodiment, both the composite rail profile 1 and the additional reinforcing slat 23 are anchored in the substrate 14 with mechanical attachment means 15.

Each figure also shows the width direction 10, the height direction 11 and, if applicable, the length direction 12 of the composite profile.

The references in the figures are:
- 1: = composite rail profile
- 2: = rail
- 3: = end profile
- 4: = running surface
- 5: = upright base plate
- 6: = bottom flange
- 7: = recess
- 8: = upright rib of the bottom flange of the rail
- 9: = upright rib of the bottom flange of the end profile
- 10: = transverse direction
- 11: = vertical direction
- 12: = longitudinal direction
- 13: = rib on the running surface
- 14: = substrate, in particular a fixed structure
- 15: = attachment means
- 16: = anchor
- 17: = nut
- 18: = ring/washer
- 19: = sliding hatch
- 20: = sliding roof
- 21: = wheel
- 22: = hatch hook
- 23: = additional reinforcement slat
- 24: = distance between the top flange and the base flange

## Claims

1. Composite rail profile 1, comprising at least two rails 2, each rail comprising a running surface 4 that is placed overhanging on an upright base plate 5 reinforced by a bottom flange 6, wherein the running surface 4 is suitable for supporting a number of sliding hatches 19 provided with wheels 21, wherein each rail 2 is made of extruded aluminum, wherein two composite rail profiles 1 and the sliding hatches 19 together form a sliding roof 20 of a fixed structure 14, **characterized in that** the bottom flange 6 comprises a recess 7, which recess 7 is provided at an end of the bottom flange 6 for connecting two adjacent rails 2 in parallel.

2. The composite rail profile 1 according to claim 1, **characterized in that** the bottom flange 6 projects on either side of the upright base plate 5.

3. The composite rail profile 1 according to claim 1 or 2, **characterized in that** the bottom flange 6 has a width that is substantially perpendicular to the upright base plate 5, wherein the recess 7 extends over at least 10% of the total width of the bottom flange 6.

4. The composite rail profile 1 according to any of the preceding claims 1 to 3, **characterized in that** the recess 7 extends over a maximum of 50% of the total width of the bottom flange 6.

5. The composite rail profile 1 according to any of the preceding claims 1 to 4, **characterized in that** the bottom flange 6 has a length, wherein the recess 7 extends over the entire length of the bottom flange 6.

6. The composite rail profile 1 according to any of the preceding claims 1 to 5, **characterized in that** the bottom flange 6 on both sides of the width terminates in the end, and wherein at least one of said ends of the bottom flange is provided with an upright rib 8.

7. The composite rail profile 1 according to claim 6, **characterized in that** the upright rib 8 is substantially parallel to the upright base plate 5.

8. The composite rail profile 1 according to any of the preceding claims 1 to 7, **characterized in that** the running surface 4 extends along one side of the upright base plate 5, wherein the running surface 4 is positioned at an angle of at least 85° and at most 95° with respect to the upright base plate 5.

9. The composite rail profile 1 according to any of the preceding claims 1 to 8, **characterized in that** the running surface 4 has a flat top and is preferably provided with a groove and/or a tooth and/or a rib 13.

10. The composite rail profile 1 according to any of the preceding claims 1 to 9, **characterized in that** the composite rail profile 1 further comprises an end profile 3, suitable for finishing the composite rail profile 1, wherein the end profile 3 comprises at least a bottom flange 6, which bottom flange 6 comprises an upright rib 9 at an end and preferably wherein the bottom flange 6 is provided with a recess 7 suitable for parallel connection of the end profile 3 to an adjacent rail 2.

11. Method for assembling a composite rail profile 1 for mobile support of a number of sliding hatches 19 provided with wheels 21, wherein two composite rail profiles 1 and the sliding hatches 19 together form a sliding roof 20 of a fixed structure 14, comprising the steps of:
a. providing two or more elongated rails 2;
b. coupling the elongated rails 2 to the composite rail profile 1;
c. providing the composite rail profile 1 on the fixed structure 14; and
d. anchoring the composite rail profile 1 to the fixed structure 14
**characterized in that** coupling takes place by connecting two adjacent elongated rails 2 in parallel, wherein each elongated rail 2 is provided with a recess 7 for said parallel connecting of two adjacent rails 2.

12. The method according to claim 11, **characterized in that** the elongated rails 2 are coupled in an overlapping manner, where two adjacent elongated rails 2 overlap each other by at least 10%.

13. The method according to claim 11 or 12, **characterized in that** the composite rail profile 1 is chemically and/or mechanically anchored to the fixed structure 14.

14. Assembly comprising at least two composite rail profiles 1 suitable for mobile support of a number of sliding hatches 19 provided with wheels 21, wherein two composite rail profiles 1 and the sliding hatches 19 together form a sliding roof 20 of a fixed structure 14.

15. The assembly according to claim 14, wherein the composite rail profile 1 is a composite rail profile 1 according to any of the preceding claims 1 to 10.
